# EUROPEAN PATENT APPLICATION

(11) **EP 1 324 177 A1**
(43) Date of publication of application: **02.07.2003**
(21) Application number: 00963029.4
(22) Date of filing: 02.10.2000
(51) Int. Cl.: G06F 1/16, H04R 1/02, H04R 1/28

(54) **PORTABLE COMPUTER**

(71) Applicant: MATSUSHITA ELECTRIC INDUSTRIAL CO., LTD., Kadoma-shi, Osaka 571-8501 (JP)
(72) Inventor: YUASA, Takafumi, Matsusaka-shi, Mie 515-0041 (JP); HONDA, Kazuki, Matsusaka-shi, Mie 515-0044 (JP); DOI, Teruo, Tsu-shi, Mie 514-0065 (JP); YONEMOTO, Yukihiro, Taki-gun, Mie 519-2423 (JP)
(74) Representative: Grünecker, Kinkeldey, Stockmair & Schwanhäusser Anwaltssozietät
(86) International application number: JP0006827
(87) International publication number: WO02029531

(57) **Abstract**

A portable computer device that realizes its versatility, without impairment of its advantages, i.e., being small, lightweight and powerful. The portable computer device comprises terminal sections (3d1, 3d2) exchanging signals with computer main unit (1a), a locking section for locking another device to be installed, and mounting sections (3a, 3b) made of a space that accommodates the terminal sections and the locking section therein. According to the portable computer device, the device required for mobile-use and the device required for table top-use can be exchageably installed in the space. Therefore, the portable computer device exerts a greater expandability without impairment of its advantage.

## Description

### TECHNICAL FIELD

The present invention relates to a portable computer device including a notebook-sized personal computer.

### BACKGROUND ART

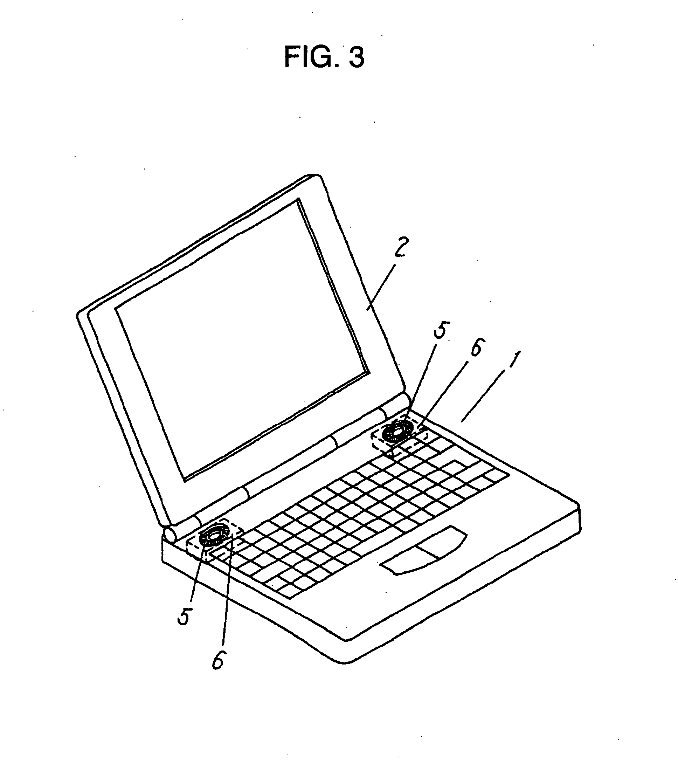

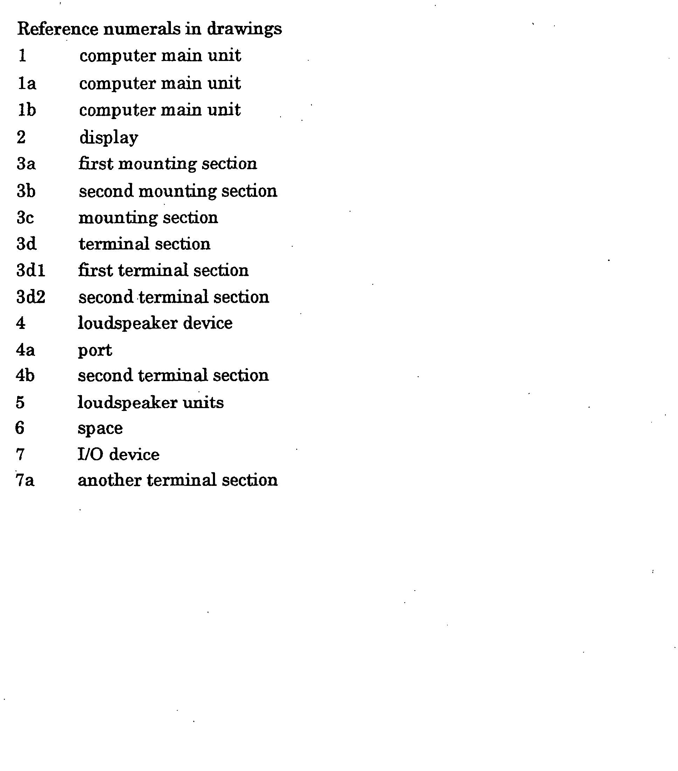

A conventional portable computer device will be explained with reference to the perspective view shown in Fig. 3.

In Fig. 3, the portable computer device includes keyboard-equipped computer main unit 1, foldable display 2 made of a liquid crystal display (LCD), and loudspeaker units 5 disposed in space 6 in main unit 1.

Recently, a portable computer device has been getting smaller, lighter, and more powerful. It is not only used as a portable device, but also convenient for indoor use, due to its small footprint, instead of a desktop computer. The fact has driven up the demand for the portable computer device.

However, such a portable computer, for example, completely relies on small loudspeaker units 5 for its sound response, so that reproduction of low-audio frequencies is not in a satisfactory level. Therefore, in order to improve sound-response characteristics to a sufficient degree, a loudspeaker device with a built-in amplifier, which is similar to one employed for a desktop computer, is required to connect with the portable computer device.

As described in the example above, the portable computer device needs to connect another device therewith, such as peripheral devices employed for desktops, for its versatility. The fact inconveniently tends to impair the merit of the portable computer, that is, being compact.

### DISCLOSURE OF THE INVENTION

The object of the present invention is to provide a portable computer device, making the most of its advantages, i.e., compact size and high performance.

The portable computer device of the present invention includes:
a display;
a computer main unit;
a mounting section containing a terminal section to exchange signals with the computer main unit, a locking section, which are disposed in the computer main unit, and a space formed in the computer main unit; and
another device, which contains another terminal section to exchange signals with the computer main unit by connecting with the terminal section, detachably installed in the mounting section by the locking section.

This another device has another terminal section for exchanging signals with the computer main unit through the connection with the terminal section described above.

According to the portable computer device, another device required for mobile-use and another device required for indoor-use are exchangeably inserted in the space. With the structure, the portable computer device satisfactorily delivers its advantage, i.e., being small and lightweight without impairment of the capability, regardless of whether mobile-use or indoor-use.

### BRIEF DESCRIPTION OF THE DRAWINGS

Fig. 1 is a perspective view illustrating a notebook-sized personal computer and a detachable another device that are shown in an embodiment of the present invention.
Fig. 2 is a perspective view illustrating a personal computer and a plurality of detachable another devices that are shown in another embodiment.
Fig. 3 is a perspective view illustrating a notebook-sized personal computer as a type of prior art portable computers.

### DETAILED DESCRIPTION OF THE PREFERED EMBODIMENTS

### First preferred embodiment

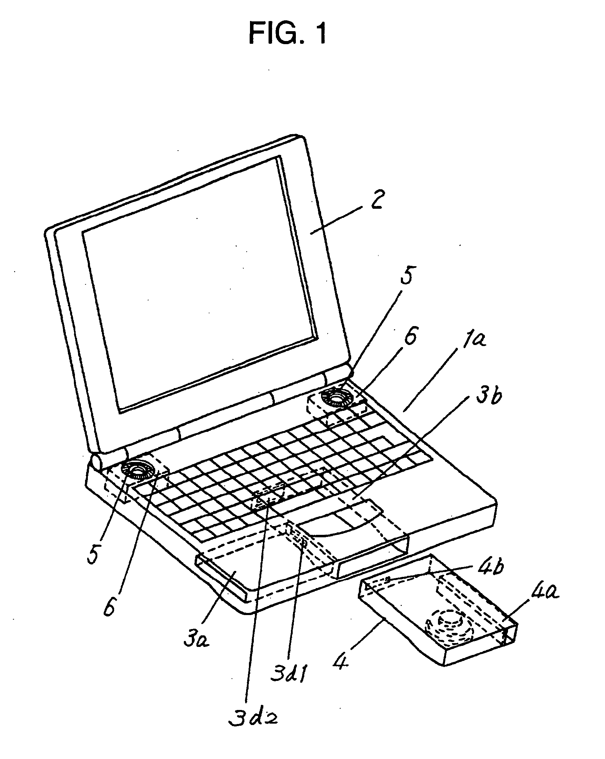

Hereinafter, the portable computer device of the embodiment of the present invention will be described with reference to the perspective view of the notebook-sized personal computer in Fig. 1, wherein the same parts are identified by the same reference numerals as ones in the notebook-sized personal computer in Fig.3, which is a type of conventional portable computer devices.

In Fig. 1, the portable computer device contains keyboard-equipped computer main unit 1a, foldable display 2 made of a liquid crystal display (LCD), and loudspeaker units 5 disposed in space 6 in main unit 1a.

Computer main unit 1a further comprises first mounting section 3a and second mounting section 3b.

The first mounting section 3a includes first terminal section 3d1 exchanging information with power supply and computer main unit 1a, and a locking section that detachably locks another device. For the locking section, a known locking mechanism, for example, press-fitting is employed (not shown.) First insertion section 3a has a space therein. The space is formed so that an I/O device including a floppy disk drive (not shown), and a rechargeable battery are installed in first mounting section 3a. Such an installed device has a first another terminal section (not shown), which exchanges information with power supply or computer main unit 1a by connecting with terminal section 3d1.

Second mounting section 3b includes second terminal section 3d2 exchanging power supply with computer main unit 1a, and a locking section locking another device so as to be detachable. The locking section (not shown) is formed as the same way as that of first mounting section 3a. Second mounting section 3b also has a space therein. The space is for accepting another device (not shown) having a second another terminal section (not shown), which exchanges information with power supply and computer main unit 1a by connecting with second terminal section 3d2.

Loudspeaker device 4, which is described as another device, contains an amplifier therein and port 4a for reproducing low-audio frequencies.

Loudspeaker device 4 is detachably installed in first mounting section 3a or second mounting section 3b. Through second terminal section 4b, loudspeaker device 4 is provided with power supply and sound information from computer main unit 1a.

When installed in first mounting section 3a or second mounting section 3b of computer main unit 1a, loudspeaker device 4 activates by connecting second terminal section 4b with first terminal section 3d1 or second terminal section 3d2 and thereby receiving power supply and sound information from computer main unit 1a.

In the embodiment, loudspeaker units 5 are installed in computer main unit 1a. Therefore, loudspeaker device 4 may be used for reproducing a low-pitched sound that cannot be covered by loudspeaker units 5.

Loudspeaker device 4 also may be used as a full-range speaker in such a way that loudspeaker units 5 do not work while loudspeaker device 4 is installed in computer main unit 1a.

Besides, although loudspeaker device 4 has been described as having a built-in amplifier in the explanation above, a loudspeaker having no amplifier may be acceptable if an adequately large output of sound information is provided from computer main unit 1a.

Although loudspeaker device 4 is described as a detachable device in the embodiment, the detachable device is not limited to loudspeaker device 4. A battery or a hard disk device may also be a detachable device. Without increasing the bulk of the body, the portable computer can exert its functions regardless of whether mobile-use or table top-use, by installing the appropriate one selected in such devices as required.

### Second Preferred Embodiment

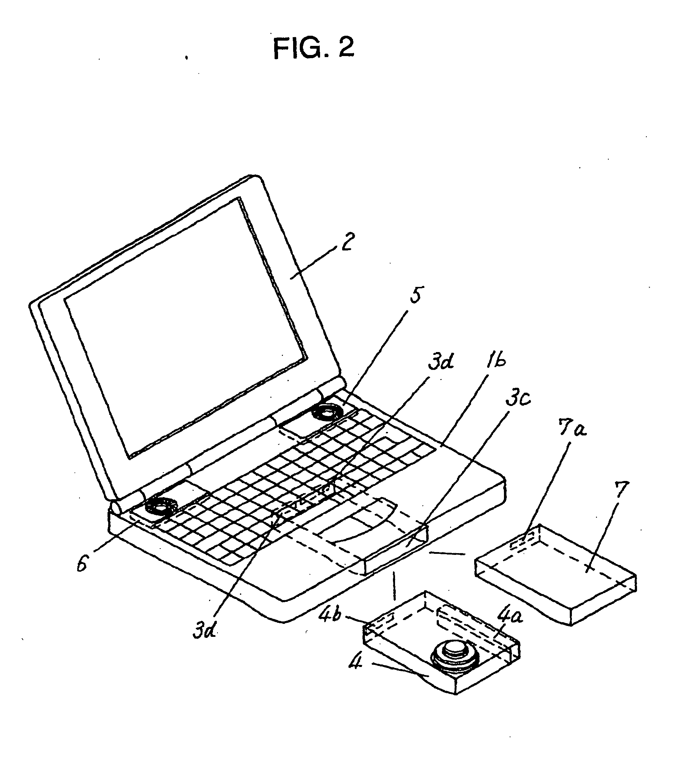

Fig. 2 illustrates a notebook-sized personal computer in another embodiment of the present invention, wherein the same parts are identified by the same reference numerals as ones described in the first preferred embodiment. In Fig. 2, the portable computer device comprises keyboard-equipped computer main unit 1b, foldable display 2 made of an LCD, and loudspeaker units 5 disposed in space 6 in main unit 1b.

Computer main unit 1b has mounting section 3c.

Mounting section 3c includes terminal section 3d exchanging information with power supply and computer main unit 1b, and a locking section that detachably locks another device. For the locking section, a mechanism similar to that employed for first mounting section 3a in the first preferred embodiment can be used. Mounting section 3c has a space therein. The space is formed so that I/O device 7 including a floppy disk drive, and a rechargeable battery are installed in mounting section 3c. Such an installed device has a first another terminal section 7a, which exchanges information with power supply and computer main unit 1b by connecting with terminal section 3d. Loudspeaker device 4 is detachably installed in mounting section 3c. Loudspeaker device 4 is provided with second terminal section 4b for receiving power and sound information from computer main unit 1b.

When carrying the notebook-sized personal computer having such a structure described above, a rechargeable battery (not shown) is installed in mounting section 3c. On the other hand, when the computer is used indoors and so on, i.e., commercial power is available, I/O device 7 such as a floppy disk drive, or loudspeaker device 4 can be installed in mounting section 3c.

In this way, the expandability as much as one equipped with a desktop computer is realized in the notebook-sized personal computer, taking full advantage of its small sized- and lightweight body.

In the figure and explanation of the embodiment, I/O device 7 and loudspeaker device 4, which are installed in mounting section 3c, have been described as having the similar size as mounting section 3c. However, I/O device 7 and loudspeaker device 4 may be smaller, or bigger than mounting section 3c. Such devices will be acceptable, in such a way that another terminal section to be a counterpart of terminal section 3d is disposed in another device, such as I/O device 7 and loudspeaker device 4, and the device is lockable by the locking section in mounting section 3c.

Besides, although loudspeaker device 4 is described as having port 4a in the two embodiments, other systems, such as a sealed speaker enclosure type system, a band-pass-box type system, an acoustic labyrinth type system, and a horn type system, are also acceptable.

### INDUSTRIAL APPLICABILITY

As described above, the portable computer device of the present invention comprises a terminal section exchanging signals with the computer main unit, a locking section locking an installed another device, and an mounting section having a space formed in the computer main unit. Another device is detachably installed in the mounting section, so that the device required for mobile-use and the device required for indoor-use can be installed in the space in the mounting section, replacing with each other as required. Regardless of indoor-use or outdoor-use, the portable computer device satisfactorily delivers its advantage, i.e., being small and lightweight without impairment of its performance.

In addition, in the case that a loudspeaker unit having an acoustic space is installed as another device, the portable computer, when used indoors, employs the loudspeaker unit. Without an external add-on loudspeaker unit for reproducing low-audio frequencies, and without being bulky inconveniently for portables, the computer can reproduce low-pitched sound and obtain sound response having high quality acoustic characteristics.

Furthermore, in the case that a loudspeaker unit having an acoustic space and an amplifier is installed as another device above, when used indoors, without an external add-on loudspeaker unit for reproducing low-audio frequencies, the computer can reproduce low-pitched sound and obtain sound response having high quality acoustic characteristics, though it is a portable computer.

Besides, in the case that a power supply terminal, which supplies power to an another device or a rechargeable battery, is disposed at the mounting section of the computer main unit, the computer can accept the devices required power supply for such as reading or writing information, such as a rechargeable battery, a floppy disk drive, and a CD-ROM drive. The portable computer thus can make the most of its expandability, taking full advantage of its small sized- and lightweight body.

Likewise, in the case that a plurality of terminals are disposed at the mounting section of the computer main unit so that power supply is delivered with each other between the plural terminals and a rechargeable battery having a relatively large volume, the mounting section can detachably accept a loudspeaker unit, which has an acoustic space and a built-in amplifier, and another terminal that receives power and sound information from the computer main unit by connecting with the terminal section of the computer main unit.

In this case, the mounting section for the rechargeable battery with a relatively large volume is used for the loudspeaker unit. Such an installation can realize the sound output with the frequency response, which is greatly improved in reproducing low-audio frequencies.

## Claims

1. A portable computer device comprising:
a computer main unit;
a mounting section containing a terminal section that exchanges signals with the computer main unit, a locking section, which are disposed in the computer main unit, and a space formed in the computer main unit; and
a device, which contains another terminal section to exchange signals with the computer main unit by connecting with the terminal section, detachably locked in the mounting section by the locking section.

2. The portable computer device of claim 1, wherein said device is a loudspeaker unit that has an acoustic space and provided with power and sound information from the computer main unit by connecting the terminal section of the computer main unit with said another terminal section.

3. The portable computer device of claim 1, wherein said device is a loudspeaker unit that has an acoustic space and a built-in amplifier, and provided with power and sound information from the computer main unit by connecting the terminal section of the computer main unit with said another terminal section.

4. The portable computer device of claim 1, wherein the terminal section has a power supply terminal supplying power to at least one of said device and a rechargeable battery.

5. The portable computer device of claim 1, wherein a plurality of terminals are disposed at the terminal section so that power supply is delivered with each other between the plural terminals and a rechargeable battery, and said device detachably installed to the mounting section is a loudspeaker unit, which has an acoustic space and a built-in amplifier, has another terminal section for being provided with power and sound information from the computer main unit by connecting with the terminal section,
